(19) Europäisches Patentamt

European Patent Office

Office européen des brevets

(11) Veröffentlichungsnummer: **0 204 985 B1**

(12) **EUROPÄISCHE PATENTSCHRIFT**

(45) Veröffentlichungstag der Patentschrift: **25.03.92**

(21) Anmeldenummer: **86106535.7**

(22) Anmeldetag: **14.05.86**

(51) Int. Cl.⁵: **F02P 7/06**, F02D 41/34, G01P 3/488, G01D 5/20

(54) **Vorrichtung zum Regeln einer Brennkraftmaschine.**

(30) Priorität: **12.06.85 DE 3520998**

(43) Veröffentlichungstag der Anmeldung:
**17.12.86 Patentblatt 86/51**

(45) Bekanntmachung des Hinweises auf die Patenterteilung:
**25.03.92 Patentblatt 92/13**

(84) Benannte Vertragsstaaten:
**DE FR GB IT**

(56) Entgegenhaltungen:
**DE-A- 2 644 324
DE-A- 2 736 576
DE-A- 2 847 522
GB-A- 2 024 433**

(73) Patentinhaber: **ROBERT BOSCH GMBH
Postfach 30 02 20
W-7000 Stuttgart 30(DE)**

(72) Erfinder: **Bisenius, Jean-Claude, Dipl.-Ing.
Orffweg 6
W-6100 Darmstadt(DE)**
Erfinder: **Decker, Heinz, Dipl.-Ing.
In der Seite 10
W-7143 Vaihingen/Enz 8(DE)**
Erfinder: **Schleupen, Richard, Dipl.-Ing.
Gottlob-Ansel-Strasse 6
W-7121 Ingersheim 1(DE)**

## Beschreibung

Stand der Technik

Die Erfindung geht aus von einer Vorrichtung nach der Gattung des Hauptanspruchs. Eine solche Vorrichtung ist z.B. aus der US-A-4 327 687 bekannt. Bei Vorrichtungen zum Regeln einer Brennkraftmaschine eines Kraftfahrzeuges, insbesondere der Zündung, Einspritzung und dgl., ist es bekannt, Sensorsysteme zur Erfassung der Winkelstellung einer Welle der Brennkraftmaschine, insbesondere der Kurbelwelle oder der Nockenwelle einzusetzen.

Solche Systeme sind z. B. als Segmentsysteme ausgebildet, bei denen Geberscheiben mit der Welle umlaufen, die an ihrem Umfang mit einer zur Anzahl der Zylinder der Brennkraftmaschine proportionalen Anzahl von Segmenten, d.h. langgestreckten markierten Bereichen, versehen sind. Bei der Erfassung der Winkelstellung der Kurbelwelle beträgt die Anzahl der Segmente dabei die Hälfte der Zylinderzahl. Bei Erfassung der Winkelstellung der Nockenwelle ist die Anzahl der Segmente gleich der Zylinderzahl, da die Kurbelwelle bekanntlich mit der doppelten Drehzahl der Nockenwelle umläuft. Dabei ist jedes Segment einem (bei Erfassung der Kurbelwelle zwei) Zylinder(n) der Brennkraftmaschine zugeordnet, und jeder Zündungs- bzw. Einspritzvorgang wird in Abhängigkeit vom Vorbeilaufen des zugehörigen Segmentes gesteuert. In einem ortsfesten Aufnahmeelement wird die Vorderflanke des Segmentes erkannt und durch geeignete Zeitsteuerung über die gesamte Segmentlänge werden die Steuervorgänge für die Brennkraftmaschine ausgelöst. Segmentsysteme mit gleich großen Segmenten haben demgegenüber den Nachteil, daß keine für eine verteilerlose oder Zweikreis-(z. B. Achtzylindermotor) Hochspannungsverteilung ausreichende Zuordnung möglich ist.

Ferner sind Segmentsysteme bekannt, bei denen einzelne Segmente durch eine Anzahl von Zähnen und Zahnlücken unterteilt sind, und die von den Zähnen bzw. Zahnlücken im Aufnahmeelement erzeugten Signale einer Steuerschaltung zugeführt werden. Dabei wird die Winkelstellung der Welle durch Auszählen der vorbeilaufenden Zähne bzw. Zahnlücken ermittelt. Dieses Verfahren ist aufwendig und erfordert eine zusätzliche Zähleinrichtung.

Bildet man ferner nur eine einzige Zahnlücke in einem Segment aus, so besteht die Gefahr, daß die zusätzliche Rückflanke eine zusätzliche Zündung auslöst.

Ferner ist es aus der DE-OS 28 47 522.1 bekannt, alle Segmente des Segmentgebers als Rampen auszubilden. Dabei ist eine Rampe gegensinnig zu den übrigen Rampen angeordnet. Dieser Segmentgeber hat aber den Nachteil, daß jeweils nur ein nadelförmiger Impuls durch die steile Flanke der Rampe erzeugt wird. Zur Steuerung der Zündung einer Brennkraftmaschine ist demgegenüber ein unterschiedlicher Ein- und Ausschaltimpuls vorteilhaft.

Bei allen hier aufgeführten Vorrichtungen sind bei Start der Brennkraftmaschine mindestens eine Umdrehung notwendig, um eine genaue Zuordnung der Markierung zu erkennen.

Aus der GB-A 2 024 433 ist ein Impulsgeber bekannt, bei dem mit Hilfe von Lücken und Zähnen Steuerimpulse erzeugt werden. Damit die Impulse jeweils gleiche Höhe aufweisen, ist der Bereich zwischen der Lücke und einem Zahn ansteigend bzw. abfallend ausgebildet. Eine besondere Markierung der Impulse kann dabei nicht erreicht werden. Vielmehr wird bei Nulldurchgang eines Impulses eines Zahnes eine Zündkerze gezündet und durch Auszählen aller Impulse die Drehzahl zur Überwachung ermittelt.

Vorteile der Erfindung

Die erfindungsgemäße Vorrichtung mit den kennzeichnenden Merkmalen der unabhängigen Ansprüche hat demgegenüber den Vorteil, daß eine Zuordnung der Zündimpulse für eine verteilerlose oder Zweikreis-Hochspannungsverteilung mit einem einzigen Geber unter Beibehaltung der beiden elektrischen Marken am Segmentanfang und Segmentende möglich ist. Aufgrund der sich ergebenden elektrischen Signale (Marken) kann man eindeutig die Zylindergruppen bei einer verteilerlosen Hochspannungsverteilung zuordnen.

Durch die in den Unteransprüchen aufgeführten Maßnahmen sind vorteilhafte Weiterbildungen der in den unabhängigen Ansprüchen angegebenen Vorrichtung möglich.

Zeichnung

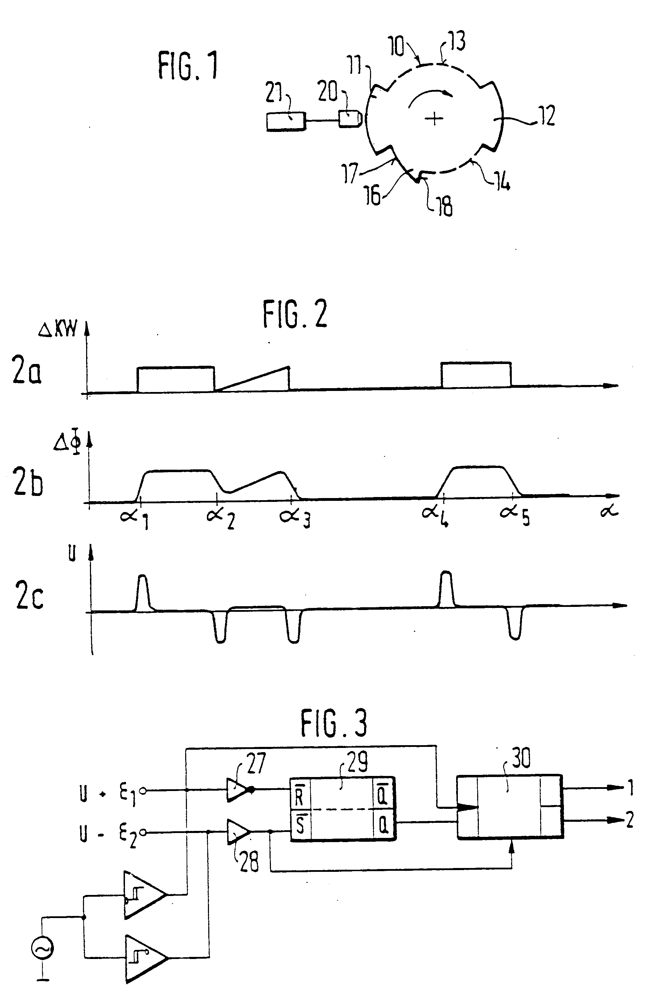

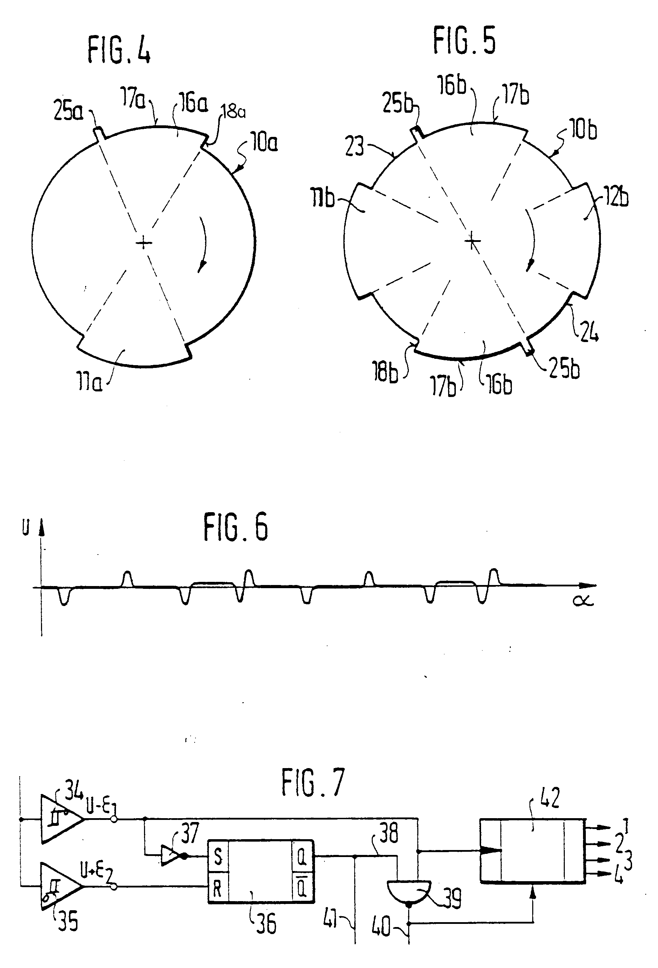

Ausführungsbeispiele der Erfindung sind in der Zeichnung dargestellt und in der nachfolgenden Beschreibung näher erläutert. Es zeigen Figur 1 eine Prinzipdarstellung einer Geberscheibe, Figur 2 ein Impulsdiagramm, Figur 3 eine schaltungsgemäße Darstellung, Figur 4 ein zweites Ausführungsbeispiel für einen Vierzylindermotor mit verteilerloser Hochspannungsverteilung, Figur 5 eine Abwandlung der Geberscheibe nach Figur 4 für einen Achtzylindermotor mit Zweikreisverteilung, Figur 6 ein dazugehöriges Impulsdiagramm und Figur 7 eine schaltungsgemäße Darstellung.

Beschreibung des Ausführungsbeispiels

In Figur 1 bezeichnet 10 eine Geberscheibe, die mit der Kurbelwelle oder der Nockenwelle einer Brennkraftmaschine umläuft. Die Geberscheibe 10 weist an ihrem Umfang Segmente 11, 12 sowie dazwischenliegende Lücken 13, 14 auf. Beim Ausführungsbeispiel gemäß Figur 1 sind dabei zwei Segmente bzw. zwei Lücken vorgesehen. Ist die Geberscheibe 10 an der Kurbelwelle der Brennkraftmaschine befestigt, eignet sie sich für Vorrichtungen zum Steuern von Vierzylindermotoren. Die Segmente 11, 12 sind gleich ausgebildet und liegen sich diametral gegenüber. In einer der Lücken 14, ist in Drehrichtung der Geberscheibe gesehen hinter dem Segment 11 eine Rampe 16 ausgebildet. Deren schiefe Ebene 17 steigt in der Drehrichtung der Geberscheibe 10 an und hat eine steil abfallende Flanke 18, die gleich den Flanken der beiden Segment 11, 12 ausgebildet ist. Die schiefe Ebene 17 der Rampe 16 schließt z. B. direkt an das Segment 11 an. Die Höhe der Rampe 16 entspricht der Höhe der beiden Segmente 11, 12.

Selbstverständlich ist es auch möglich, die Rampe 16 in Drehrichtung der Geberscheibe 10 gesehen vor dem Segment 11 anzuordnen. Die schiefe Ebene 17 der Rampe 16 muß dann entgegen der Drehrichtung der Geberscheibe 10 ansteigen.

In der Nähe des Umfangs der Geberscheibe 10 befindet sich ein raumfestes Aufnahmeelement 20, das seinerseits mit einer Steuerschaltung 21 in Wirkverbindung steht. Die Art der Wechselwirkung von Geberscheibe 10 und Aufnahmeelement 20 kann dabei sehr verschiedenartig sein. Bei Ausnutzung von magnetischen Wechselwirkungen kann die Geberscheibe 10 aus ferromagnetischem Blech gestanzt sein, und als Aufnahmeelement 20 wird ein Induktivgeber verwendet, der im Ruhezustand bereits einen magnetischen Fluß aufweist.

Wenn die Geberscheibe 10, wie in Figur 1 angezeigt, im Uhrzeigersinn umläuft, wird vom Aufnahmeelement 20 zunächst - beispielsweise im Segment 11 - die Vorderflanke des Segments 11 erfaßt. Der Zündvorgang kann dann beispielsweise am Ende des Segments 11 bei einer der Rückflanke des Segments 11 entsprechenden Winkelstellung ausgelöst werden.

Zur Veranschaulichung der Wirkungsweise der in Figur 1 dargestellten Vorrichtung ist in Figur 2 der zeitliche Verlauf der von den Segmenten 11, 12 bzw. von den Lücken 13, 14 und von der Rampe 16 erzeugten Signale dargestellt. Figur 2a zeigt eine Übertragung der Drehbewegung der Kurbelwelle ( $\Delta$ KW) auf die Umdrehung der Geberscheibe 10 in Abhängigkeit vom Drehwinkel ( $\alpha$ ) der Geberscheibe. In Figur 2b ist der im Aufnahmeelement 20 erzeugte magnetische Fluß ( $\Delta \Phi$ ) in Abhängigkeit vom Drehwinkel ( $\alpha$ ) der Geberscheibe 10 aufgezeigt. Bewegt sich die Geberscheibe 10 im Uhrzeigersinn, so wird an der Vorderflanke des Segments 11, d.h. bei der Winkelstellung $\alpha_1$,

im Aufnahmeelement 20 eine magnetische Flußänderung erzeugt. Der magnetische Fluß verläuft in gleicher Höhe, während sich das Segment 11 am Aufnahmeelement 20 vorbeibewegt, folglich wird keine Spannung induziert. Erreicht das Aufnahmeelement 20 die Rückflanke des Segments 11, d.h. befindet sich die Geberscheibe 10 in der Winkelstellung $\alpha_2$, so fällt der magnetische Fluß ab. Bewegt sich nun die Geberscheibe 10 mit der Rampe 16 am Aufnahmeelement 20 vorbei, so wird bis zur Flanke 18, d.h. bis zur Winkelstellung $\alpha_3$ ein ansteigender magnetischer Fluß im Aufnahmeelement 20 erzeugt. Während sich nun die Lücke 14 am Aufnahmeelement 20 vorbeibewegt, wird kein wesentlicher magnetischer Fluß erzeugt. Analog zum Segment 11 wird nun auch vom Segment 12 an dessen Vorderflanke als auch an der Rückflanke, d.h. bei der Winkelstellung $\alpha_4$ und $\alpha_5$ eine magnetische Flußänderung erzeugt.

Figur 2c zeigt nun die im Aufnahmeelement 20 erzeugten Impulse. Jeweils an der Vorderflanke der Segmente 11, 12, d.h. bei der Winkelstellung $\alpha_1$ bzw. $\alpha_4$, wird ein positiver Impuls erzeugt. Erreicht das Aufnahmeelement 20 die Rückflanke der Segmente 11, 12, d.h. befindet sich die Geberscheibe 10 in der Winkelstellung $\alpha_2$ bzw. $\alpha_5$ so wird ein negativer Impuls hervorgerufen. Aufgrund der schiefen Ebene 17 der Rampe 16 und sich des dadurch ändernden magnetischen Flusses ist in deren Bereich, d.h. zwischen der Winkelstellung $\alpha_2$ und $\alpha_3$ ein geringes in etwa gleich hohes Impulsniveau vorhanden. An der Flanke 18, d.h. bei Winkelstellung $\alpha_3$, entsteht nun wieder ein negativer Impuls. Dieser zusätzliche Impuls, hervorgerufen durch die Flanke 18, kann nun als Markierung verwendet werden.

Die an den Flanken der Segmente 11 bzw. 12 und der Rampe 16 im Aufnahmeelement 20 erzeugten Spannungen werden über zwei Schmitt-Trigger unterschiedlicher Schaltschwelle den beiden Eingangsklemmen $E_1$ und $E_2$ der in Figur 3 im Prinzipschaltbild dargestellten Auswerteschaltung zugeführt. An die Eingangsklemme $E_1$, an der die Spannung $U_+$ anliegt, ist ein Inverter 27 angeschlossen. An die Eingangsklemme $E_2$, an der die Spannung $U$ anliegt, ist hingegen eine nicht invertierende Treiberstufe 28 angeschlossen. Der Ausgang des Inverters 27 ist mit dem invertierenden Reset-Eingang eines Flip-Flops 29 verbunden. An dessen invertierenden Set-Eingang ist der Ausgang der Treiberstufe 28 angeschlossen. Vom Ausgang Q des Flip-Flops 29 führt eine Leitung zum Clear Enable-Eingang eines Zählers 30. Der invertierende Clear-Eingang des Zählers 30 ist mit dem Ausgang der Treiberstufe 28 verbunden. Ferner liegt am Zähleingang des Zählers 30 die vor dem Inverter 27 abgegriffene Spannung $U_+$ an. Von den beiden Ausgängen des Zählers 30 führen Leitungen zu den beiden Zylindergruppen eines Vierzylindermotors. Diese Schaltung dient zur Gewinnung eines Synchronimpulses, um bereits bei Start der Brennkraftmaschine eine genaue Zuordnung der Stellung des Geberrades zur jeweiligen Drehung der Welle zu ermöglichen. Dieses Prinzip der Auswertung ist selbstverständlich für alle Motoren mit gerader Zylinderanzahl anwendbar. Bei asymmetrischen Motoren ist darauf zu achten, daß die Asymmetrie innerhalb einer Kurbelwellenumdrehung auftritt.

Figur 4 zeigt ein Ausführungsbeispiel geeignet für einen Vierzylindermotor mit verteilerloser Hochspannungsverteilung. Hier ist nur ein Segment 11a und diesem diametral gegenüberliegend eine Rampe 16a angeordnet. Die Rampe 16a ersetzt dabei das Segment 12 nach dem Ausführungsbeispiel nach Figur 1. Die schiefe Ebene 17a der Rampe 16a steigt dabei entgegen der Drehrichtung der Geberscheibe 10a an. Am Anfang der schiefen Ebene 17a befindet sich eine Nase 25a mit steil abfallenden Flanken. Das Segment 11a und die schiefe Ebene 17a zusammen mit der Nase 25a sind gleich lang ausgebildet. Die Rückflanke der Nase 25a ist z. B. im Bereich des oberen Totpunkts angeordnet.

In Figur 5 ist eine Abwandlung des Ausführungsbeispiels nach Figur 4 für einen Achtzylindermotor mit Zweikreisverteilung dargestellt. Gleiche Teile sind wieder mit gleichen Ziffern bezeichnet. Im Unterschied zu Figur 1 bzw. Figur 4 sind hier zwei gleich lange Rampen 16b innerhalb eines Segments ausgebildet und ersetzen somit diese Segmente. Durch die Ausbildung für einen Achtzylindermotor ergeben sich zusätzliche Lücken 23 bzw. 24. Am Ende der schiefen Ebene 17b der jeweiligen Rampe 16b ist eine Nase 25b mit steil abfallenden Flanken ausgebildet. Ist die in der Figur 5 dargestellte Geberscheibe 10b an der Kurbelwelle einer Brennkraftmaschine befestigt, so eignet sich diese zum Steuern von Achtzylindermotoren.

In Figur 6 sind die bei einer Drehbewegung der Geberscheibe 10b im Uhrzeigersinn im Aufnahmeelement 20 erzeugten Impulse dargestellt. Es zeigt alle bei einer vollständigen Umdrehung der Geberscheibe 10b im Uhrzeigersinn erzeugten Impulse und beginnt mit dem durch die Vorderkante des Segments 12b hervorgerufenen negativen Impuls. Abhängig von der Polarität der Anschlüsse des Ausnahmeelements 20 können die Impulse auch umgekehrte Polarität annehmen. Es ist ersichtlich, daß jeweils im Bereich der schiefen Ebene 17b der Rampe 16b die Impulse nicht auf Null zurückgehen. Beim Ausführungsbeispiel nach Figur 1 ist bei Start der Brennkraftmaschine noch maximal eine Umdrehung der Geberscheibe 10 notwendig, bis eine angeschlossene Auswerteschaltung die Markierung und deren Zuordnung erkennt. Diese Zuordnung beim Start ist durch Ausbildung der Nasen 25b eher möglich.

In Figur 7 ist im Prinzipschaltbild eine Auswerteschaltung für das Ausführungsbeispiel nach Figur 5 dargestellt. Diese Auswerteschaltung ist aber auch analog für das Ausführungsbeispiel nach Figur 4 verwendbar. Erneut werden mit Hilfe zweier Schmitt-Trigger 34 bzw. 35 mit unterschiedlicher Schaltschwelle die im Aufnahmeelement 20 erzeugten Spannungen den beiden Eingangsklemmen $E_1$ und $E_2$ zugeführt. An der Eingangsklemme $E_1$ liegt die Spannung U. und an der Eingangsklemme $E_2$ die Spannung $U_+$ an. Die Eingangsklemme $E_2$ ist mit dem Reset-Eingang eines Flip-Flops 36 verbunden. An die Eingangsklemme $E_1$ ist ein Invertierer 37 angeschlossen, dessen Ausgang mit dem Set-Eingang des Flip-Flops 36 verbunden ist. Vom Ausgang Q des Flip-Flops 36 führt eine Leitung 38 zum Eingang eines NAND-Gatters 39 (invertierendes UND-Glied). Dessen anderer Eingang ist mit der Eingangsklemme $E_1$ verbunden. Am Ausgang des NAND-Gatters 39 tritt der Synchronimpuls auf und führt über eine Leitung 40 zu einem nicht dargestellten Mikrocomputer der damit synchronisiert wird. An einer Leitung 41 steht die elektrische Segmentinformation an und geht von hier auf einen weiteren Mikrocomputereingang.

Der Ausgang des NAND-Gatters 39 ist ferner mit dem invertierenden Reset-Eingang eines Zählers 42 verbunden. Am Zähleingang des Zählers 42 liegt die vor dem Inverter 37 abgegriffene Spannung $U_+$ an. Von den Ausgängen des Zählers 42 führen Leitungen zu den Zylindergruppen der Brennkraftmaschine. Bei einem Achtzylindermotor sind dabei vier Ausgänge notwendig.

**Patentansprüche**

1. Vorrichtung zum Steuern einer Brennkraftmaschine eines Kraftfahrzeuges mit einem Sensorsystem, bei dem eine mit einer Welle der Brennkraftmaschine umlaufende Geberscheibe (10) mit einem raumfesten Aufnahmeelement (20) in Wirkverbindung steht, die an ihrem Umfang mit einer zur Anzahl der Zylinder der Brennkraftmaschine proportionalen Anzahl von das Aufnahmeelement (20) beeinflussenden Segmenten (11, 12), die eine steil abfallende Vorder- und Rückflanke haben, versehen ist und das Aufnahmeelement (20) mit einer Steuerschaltung (21) für die Zündung, Einspritzung oder dergleichen des Kraftfahrzeugs verbunden ist, dadurch gekennzeichnet, daß in Drehrichtung gesehen vor oder hinter mindestens einem Segment (11, 12) eine Rampe (16) mit einer steil abfallenden Flanke (18) als Markierung angeordnet ist, die ein der Steuerschaltung (21) zuführbares zur Erkennung mindestens eines der Zylinder dienendes Signal erzeugt.

2. Vorrichtung nach Anspruch 1, dadurch gekennzeichnet, daß beim Abtasten die schiefe Ebene (17) der Rampe (16) in Drehrichtung der Geberscheibe (10) hinter dem zugeordneten Segment (11, 12) ansteigt und die steil abfallende Flanke (18) sich auf der dem Segment (11, 12) abgewandten Seite der Rampe (16) befindet.

3. Vorrichtung nach Anspruch 1, dadurch gekennzeichnet, daß beim Abtasten die schiefe Ebene (17) der Rampe (16) in Drehrichtung der Geberscheibe (10) vor dem zugeordneten Segment (11, 12) abfällt und daß die dem Segment (11, 12) abgewandte Seite der Rampe (16) die steil abfallende Flanke (18) bildet.

4. Vorrichtung nach einem der Ansprüche 1 bis 3, dadurch gekennzeichnet, daß die schiefe Ebene (17) der Rampe (16) direkt an dem ihr zugeordneten Segment (11, 12) ausgebildet ist.

5. Vorrichtung zum Steuern einer Brennkraftmaschine eines Kraztfahrzeuges mit einem Sensorsystem, bei dem eine mit einer Welle der Brennkraftmaschine umlaufende Geberscheibe (10a, 10b) mit einem raumfesten Aufnahmeelement (20) in Wirkverbindung steht, die an ihrem Umfang mit einer zur Anzahl der Zylinder der Brennkraftmaschine proportionalen Anzahl von das Aufnahmeelement (20) beeinflussenden Segmenten (11a, 16a, 11b, 12b, 16b) die eine steil abfallende Vorder- und Rückflanke haben, versehen ist und das Aufnahmeelement (20) mit einer Steuerschaltung (21) für die Zündung, Einspritzung oder dergleichen des Kraftfahrzeugs verbunden ist, dadurch gekennzeichnet, daß mindestens ein Segment (11a, 16a, 11b, 12b, 16b) als Rampe (16a, 16b) mit einer steilen Flanke (18a, 18b) ausgebildet ist, daß das tiefere Ende der schiefen Ebene (17a, 17b) der Rampe (16a, 16b) einen Vorsprung (25a, 25b) mit steilen Flanken aufweist, und daß die Flanken des Vorsprungs (25a, 25b) und die Flanke (18a, 18b) der Rampe (16a, 16b) je ein der Steuerschaltung (21) zuführbares Signal erzeugen, wobei eines der Signale ein zusätzliches Markierungssignal zur Erkennung mindestens eines der Zylinder ist.

6. Vorrichtung nach Anspruch 5, dadurch gekennzeichnet, daß sich jeweils zwei gleich ausgebildete Segmente (11b, 12b) bzw. Rampen (16b, 17b) mit Vorsprüngen (25b) diametral gegenüberliegen.

7. Vorrichtung nach den Ansprüchen 5 und 6, dadurch gekennzeichnet, daß einer der Vorsprünge (25a, 25b) im Bereich des oberen Totpunktes der Kurbelwelle angeordnet ist.

8. Zündsystem mit verteilerloser oder Zweikreis-Hochspannungsverteilung, dadurch gekennzeichnet, daß es eine Vorrichtung nach einem der Ansprüche 1 bis 7 umfaßt.

**Claims**

1. Device for controlling an internal combustion engine of a motor vehicle, comprising a sensor system in which a transmitter disc (10) revolving with a shaft of the internal combustion engine is effectively connected to a spatially fixed pick-up element (20), which disc is provided on its circumference with a number of segments (11, 12) influencing the pick-up element (20), which have a steeply falling front and rear edge, which number is proportional to the number of cylinders of the internal combustion engine, and the pick-up element (20) is connected to a control circuit (21) for the ignition, injection or the like of the motor vehicle, characterised in that in front of or behind at least one segment (11, 12), seen in the direction of rotation, a ramp (16) having a steeply falling edge (18) as marking is arranged which generates a signal, used for detecting at least one of the cylinders, which can be supplied to the control circuit (21).

2. Device according to Claim 1, characterised in that during the scanning, the inclined plane (17) of the ramp (16) rises behind the associated segment (11, 12) in the direction of rotation of the transmitter disc (10) and the steeply falling edge (18) is located on the side of the ramp (16) facing away from the segment (11, 12).

3. Device according to Claim 1, characterised in that during the scanning, the inclined plane (17) of the ramp (16) falls in front of the associated segment (11, 12) in the direction of rotation of the transmitter disc (10) and in that the side of the ramp (16) facing away from the segment (11, 12) forms the steeply falling edge (18).

4. Device according to one of Claims 1 to 3, characterised in that the inclined plane (17) of the ramp (16) is formed directly on its associated segment (11, 12).

5. Device for controlling an internal combustion engine of a motor vehicle, comprising a sensor system in which a transmitter disc (10a, 10b) revolving with a shaft of the internal combustion engine is effectively connected to a spatially fixed pick-up element (20), which disc is provided on its circumference with a number of segments (11a, 16a, 11b, 16b, 12b) influencing the pick-up element (20), which have a steeply falling front and rear edge, which number is proportional to the number of the cylinders of the internal combustion engine, and the pick-up element (20) is connected to a control circuit (21) for the ignition, injection or the like of the motor vehicle, characterised in that at least one segment (11a, 16a, 11b, 12b, 16b) is constructed as ramp (16a, 16b) with a steep edge (18a, 18b), in that the lower end of the inclined plane (17a, 17b) of the ramp (16a, 16b) exhibits a projection (25a, 25b) with steep edges, and in that the edges of the projection (25a, 25b) and the edge (18a, 18b) of the ramp (16a, 16b) each generate a signal which can be supplied to the control circuit (21), one of the signals being an additional marking signal for detecting at least one of the cylinders.

6. Device according to Claim 5, characterised in that in each case two equally constructed segments (11b, 12b) or ramps (16b, 17b) with projections (25b) are diametrically opposite one another.

7. Device according to Claims 5 and 6, characterised in that one of the projections (25a, 25b) is arranged in the area of the top dead centre of the crankshaft.

8. Ignition system with distributor-less or two-circuit high-tension distribution, characterised in that it comprises a device according to one of Claims 1 to 7.

**Revendications**

1. Dispositif pour commander un moteur à combustion interne d'un véhicule automobile à l'aide d'un système à capteur selon lequel un disque de générateur (10) qui tourne sur un axe du moteur à combustion interne coopère avec un élément de capteur (20) fixe dans l'espace, le disque comportant à la périphérie un nombre de segments (11, 12) influençant l'élément de capteur (20), ce nombre étant proportionnel au nombre de cylindres du moteur à combustion interne, ces segments ayant un flanc avant et un flanc arrière à pente très raide et l'élément de capteur (20) est relié à un circuit de commande (21) pour l'allumage, l'injection ou analogue du véhicule automobile, dispositif caractérisé en ce qu en aval ou en amont d'au moins un segment (11, 12), il est prévu une rampe (16) avec un flanc décroissant raide (18) comme élément de repère ou de marquage qui génère un signal susceptible d'être fourni au circuit de commande (21) pour permettre de reconnaître au moins l'un des cylindres.

2. Dispositif selon la revendication 1, caractérisé en ce que lors de la détection du plan incliné (17) de la rampe (16) est croissant dans le sens de rotation du disque (10) derrière le segment associé (11, 12) et le flanc raide (18) se trouve du côté de la rampe (16) non tourné vers le segment (11, 12).

3. Dispositif selon la revendication 1, caractérisé en ce qu'à la détection, le plan incliné (17) de la rampe (16) descend avant le segment (11, 12) associé dans le sens de rotation du disque (10) et le côté de la rampe (16) opposé au segment (11, 12) forme le flanc raide descendant (18).

4. Dispositif selon l'une des revendications 1 à 3, caractérisé en ce que le plan incliné (17) de la rampe (16) est réalisé directement sur le segment associé (11, 12).

5. Dispositif de commande d'un moteur à combustion interne d'un véhicule automobile muni d'un système à capteur et comportant un disque de générateur (10a, 10b) tournant sur un axe du moteur à combustion interne, coopérant avec un élément de capteur (20) fixe dans l'espace, disque dont la périphérie comporte un nombre de segments (11a, 16a, 11b, 12b) influençant l'élément de capteur (20), ce nombre étant proportionnel au nombre de cylindres du moteur, ces segments ayant un flanc avant et un flanc arrière raides, et l'élément de capteur (20) est relié à un circuit de commande (21) d'allumage, d'injection ou analogue d'un véhicule automobile, dispositif caractérisé en ce qu au moins un segment (11a, 16a, 11b, 12b, 16b) est en forme de rampe (16a, 16b) avec un flanc raide (18a, 19b) et l'extrémité la plus basse du plan incliné (17a, 17b) de la rampe (16a, 16b) comporte une partie en saillie (25a, 25b) avec des flancs raides et en ce que les flancs de la partie en saillie (25a, 25b) et les flancs (18a, 18b) de la rampe (16a, 16b) génèrent respectivement un signal susceptible d'être fourni au circuit de commande (21), l'un des signaux étant un signal de repérage supplémentaire permettant de reconnaître au moins l'un des cylindres.

6. Dispositif selon la revendication 5, caractérisé en ce que chaque fois deux segments de forme égale (11b, 12b) ou de rampes (16b, 17b) avec des parties en saillie (25b) sont diamétralement opposes.

7. Dispositif selon l'une des revendications 5 et 6, caractérisé en ce que l'une des parties en saillie (25a, 25b) se trouve au niveau du point mort haut du vilebrequin.

8. Système d'allumage à distribution de haute tension sans distributeur ou avec deux circuits, caractérisé en ce qu'il comprend un dispositif selon l'une des revendications 1 à 7.

FIG. 1

FIG. 2

$\triangle KW$

2a

$\triangle \overline{\Phi}$

2b

$\alpha_1 \quad \alpha_2 \quad \alpha_3 \quad \alpha_4 \quad \alpha_5 \quad \alpha$

U

2c

FIG. 3

$U + \mathcal{E}_1$

$U - \mathcal{E}_2$

$\overline{R} \qquad \overline{Q}$

$\overline{S} \qquad Q$

1

2

FIG.4

FIG.5

FIG.6

FIG.7